# EUROPÄISCHE PATENTANMELDUNG

(11) **EP 1 318 222 A1**
(43) Veröffentlichungstag der Anmeldung: **11.06.2003**
(21) Anmeldenummer: 02007776.4
(22) Anmeldetag: 06.04.2002
(51) Int. Cl.: D04H 13/00, B29C 70/08

(54) **Textile Armierung**

(30) Priorität: 06.12.2001 DE 20119792 U; 09.01.2002 DE 20200250 U
(71) Anmelder: SAERTEX Wagener GmbH & Co. KG, 48369 Saerbeck (DE)
(72) Erfinder: Wagener, Gert, 48282 Emsdetten (DE)
(74) Vertreter: Habbel, Hans-Georg, Dipl.-Ing.

(57) **Zusammenfassung**

Die Erfindung bezieht sich auf eine textile Armierung mit einer oberen und einer unteren Deckschicht, die beiderseits einer die Dicke des Produktes vorgebenden Zwischenschicht angeordnet sind, wobei die obere Deckschicht mit der Zwischenschicht vernäht ist, auf die untere Seite der Zwischenschicht eine Kleberschicht aufgebracht ist und die untere Deckschicht mittels der Kleberschicht mit der Zwischenschicht verbunden ist.

## Beschreibung

Die Erfindung bezieht sich auf eine textile Armierung gemäß dem Oberbegriff des Hauptanspruches.

In der EP 0 395 548 B1 wird eine Textilarmierung beschrieben, die für die Herstellung von Formteilen als Verbundstoff oder Artikeln mit einer solchen Armierung anwendbar ist, wobei wenigstens zwei textile Verstärkungsschichten vorgesehen sind, die beiderseits einer die Dicke des Produktes vorgebenden Zwischenschicht angeordnet sind. Diese Zwischenschicht oder Vliesschicht besteht aus einer Lage synthetischer Fasern, die eine dauerhafte Ondulierung aufweisen, so dass die Zwischenschicht eine leichte, dicke und lufthaltige Schicht darstellt. Die verschiedenen Schichten sind untereinander durch Vernähen oder Verstricken verbunden. Derartige, sogenannte Sandwich-Konstruktionen dienen als Armierung im Glasfaserkunststoffbereich, insbesondere in dem sogenannten RTM-Verfahren (Resine Transfer Moulding), bei dem ein höchstmöglicher Harzfluß durch die Zwischenschicht und eine gute Trapierfähigkeit, d. h. also Formgebungsmöglichkeit der Armierung angestrebt wird.

Diese bekannte Textilarmierung weist eine hohe Dehnfähigkeit und einen ausgezeichneten Harzfluß auf, hat aber den Nachteil, dass durch Vernähen der beiden Deckschichten mit der Zwischenschicht eine gewisse Rauhigkeit auftritt, die vermeidbar sein soll. Auch kann durch das vollständige Durchnähen durch alle Schichten hindurch mehr Harz in der Z-Richtung hindurchfließen als gewünscht wird und zu harzreichen Bereichen im fertigen Laminat führen, was ebenfalls vermieden werden sollte.

Der Erfindung liegt daher die Aufgabe zugrunde, eine textile Armierung zu schaffen, die bei gleichguter Harzflussqualität keine vollkommene Durchnähung aller Lagen aufweist.

Diese der Erfindung zugrundeliegende Aufgabe wird durch die Lehre des Hauptanspruches gelöst.

Eine vorteilhafte Ausgestaltung ist in dem Unteranspruch erläutert.

Mit anderen Worten ausgedrückt wird vorgeschlagen, dass die obere Deckschicht, d. h. im wesentlichen eine Glasfaserdeckschicht, mit der Zwischenschicht, d. h. der voluminösen Zwischenschicht, durch Vernähen verbunden ist. Die andere Seite der Zwischenschicht wird mit einer Kleberschicht oder Kleberlage ausgerüstet, und die untere Deckschicht, ebenfalls vorzugsweise eine Glasfaserdeckschicht, wird nunmehr mit dem Gebilde, d. h. mit der Zwischenschicht und der oberen Deckschicht, durch Kleben verbunden. Vorzugsweise besteht die Kleberschicht aus einem Thermoplasten und ist sehr dünn ausgebildet. Durch Erhitzen kann nunmehr die Verbindung zwischen der unteren Deckschicht und der Zwischenschicht herbeigeführt werden.

Die untere Deckschicht ist damit ohne Vernähen mit der Zwischenschicht verbunden, so dass die textile Armierung keine Durchnähung aller Lagen aufweist.

## Patentansprüche

1. Textile Armierung mit einer oberen und einer unteren Deckschicht, die beiderseits einer die Dicke des Produktes vorgebenden Zwischenschicht angeordnet sind, **dadurch gekennzeichnet, dass** die obere Deckschicht mit der Zwischenschicht vernäht ist, auf die untere Seite der Zwischenschicht eine Kleberschicht aufgebracht ist und die untere Deckschicht mittels der Kleberschicht mit der Zwischenschicht verbunden ist.

2. Textile Armierung nach Anspruch 1, **dadurch gekennzeichnet, dass** die Kleberschicht als Thermoplastschicht ausgebildet ist.
